(19) Europäisches Patentamt
European Patent Office
Office européen des brevets

(11) **EP 4 197 689 A1**

(12) **EUROPEAN PATENT APPLICATION**
published in accordance with Art. 153(4) EPC

(43) Date of publication:
**21.06.2023 Bulletin 2023/25**

(21) Application number: **21871940.9**

(22) Date of filing: **05.07.2021**

(51) International Patent Classification (IPC):
*B23K 26/356* (2014.01)   *B23K 26/00* (2014.01)

(52) Cooperative Patent Classification (CPC):
**B23K 26/00; B23K 26/356**

(86) International application number:
**PCT/JP2021/025359**

(87) International publication number:
**WO 2022/064808 (31.03.2022 Gazette 2022/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.09.2020 JP 2020159831**

(71) Applicant: **Hamamatsu Photonics K.K.**
**Hamamatsu-shi, Shizuoka 435-8558 (JP)**

(72) Inventors:
• **KABEYA, Yuki**
  **Hamamatsu-shi, Shizuoka 435-8558 (JP)**
• **KURITA, Takashi**
  **Hamamatsu-shi, Shizuoka 435-8558 (JP)**
• **YOSHIMURA, Ryo**
  **Hamamatsu-shi, Shizuoka 435-8558 (JP)**
• **WATARI, Takeshi**
  **Hamamatsu-shi, Shizuoka 435-8558 (JP)**

(74) Representative: **Grünecker Patent- und Rechtsanwälte**
**PartG mbB**
**Leopoldstraße 4**
**80802 München (DE)**

(54) **LASER MACHINING METHOD AND LASER MACHINING DEVICE**

(57) Disclosed is a laser processing method for imparting compressive residual stress to an object along an objective area on a surface of the object by irradiating the objective area with laser light. The laser processing method includes a processing step of scanning the objective area with an irradiation spot of the laser light while increasing a moving average in intensity of the laser light per unit area.

**Fig.5**

EP 4 197 689 A1

## Description

## Technical Field

The present disclosure relates to a laser processing method and a laser processing apparatus.

## Background Art

A laser processing method in which an absorbing material layer that absorbs laser light is formed on a surface of an object and the absorbing material layer is irradiated with laser light to impart compressive residual stress to the object has been described in Patent Literature 1. In a laser processing method described in Patent Literature 1, an absorbing material layer is formed such that a thickness of the absorbing material layer is a predetermined thickness in order to impart uniform compressive residual stress to an object.

## Citation List

## Patent Literature

[Patent Literature 1] Japanese Unexamined Patent Publication No. H8-112681

## Summary of Invention

## Technical Problem

However, it is difficult to impart uniform compressive residual stress to an object along an objective area on a surface of the object by simply forming an absorbing material layer such that a thickness of the absorbing material layer is a predetermined thickness, as in the laser processing method described in Patent Literature 1.

An object of the present disclosure is to provide a laser processing method and a laser processing apparatus capable of curbing variation in compressive residual stress imparted to an object along an objective area on a surface of the object.

## Solution to Problem

According to an aspect of the present disclosure, there is provided a laser processing method for imparting compressive residual stress to an object along an objective area on a surface of the object by irradiating the objective area with laser light, the method including: a processing step of scanning the objective area with an irradiation spot of the laser light while increasing a moving average in intensity of the laser light per unit area.

In this laser processing method, the objective area on the surface of the object is scanned with the irradiation spot of the laser light to impart the compressive residual stress to the object along the objective area. It has been experimentally verified that, in the scanning of the irradiation spot of the laser light, if the intensity of the laser light per unit area is constant, as the area scanned with the irradiation spot of the laser light increases in the objective area, the compressive residual stress tends to be more difficult to impart. Here, the objective area is scanned with the irradiation spot of the laser light while increasing the moving average in the intensity of the laser light per unit area. As a result, the compressive residual stress imparted to the object is curbed from decreasing as compared with the case where the intensity of the laser light per unit area is constant. As described above, according to this laser processing method, it is possible to curb the variation in the compressive residual stress imparted to the object along the objective area on the surface of the object.

In the laser processing method according to the aspect of the present disclosure, in the processing step, a process of moving the irradiation spot of the laser light along each of a plurality of lines extending in a first direction and arranged in a second direction perpendicular to the first direction may be executed to scan the objective area with the irradiation spot of the laser light, and in the processing step, the intensity of the laser light per unit area may be increased for at least one of the plurality of lines to increase the moving average in the intensity of the laser light. Thereby, the scanning with the irradiation spot of the laser light and the control of the intensity of the laser light per unit area can be executed simply and easily.

In the laser processing method according to the aspect of the present disclosure, in the processing step, as the process, a process of moving the irradiation spot of the laser light from the one side to the other side in the first direction and a process of moving the irradiation spot of the laser light from the other side to the one side in the first direction may be alternately executed. Thereby, the objective area can be efficiently scanned with the irradiation spot of the laser light.

In the laser processing method according to the aspect of the present disclosure, in the processing step, a position of a convergence spot of the laser light may be moved in a direction intersecting with the objective area to increase the moving average in the intensity of the laser light. As a result, the moving average in the intensity of the laser light per unit area can be increased without adjusting the output of the laser light.

The laser processing method according to the aspect of the present disclosure may further include: a preparation step of scanning a sample area on a surface of a sample with the irradiation spot of the laser light while keeping the intensity of the laser light per unit area constant to acquire compressive residual stress imparted to the sample on the surface of the sample, wherein, in the processing step, the moving average in the intensity of the laser light per unit area may be increased on the basis of the compressive residual stress imparted to the sample. Accordingly, it is possible to more reliably curb the variation in the compressive residual stress imparted to the object.

According to another aspect of the present disclosure, there is provided a laser processing apparatus for imparting compressive residual stress to an object along an objective area on a surface of the object by irradiating the objective area, the apparatus including: a support part configured to support the object; an irradiation part configured to irradiate the objective area with the laser light; and a control part configured to control an operation of at least one of the support part and the irradiation part, wherein the control part controls the operation of at least one of the support part and the irradiation part such that the objective area is scanned with an irradiation spot of the laser light while a moving average in intensity of the laser light per unit area is increased.

According to this laser processing apparatus, as in the laser processing method described above, it is possible to curb the variation in the compressive residual stress imparted to the object along the objective area on the surface of the object.

**Advantageous Effects of Invention**

According to the present disclosure, it is possible to provide a laser processing method and a laser processing apparatus capable of curbing variation in compressive residual stress of an object imparted on a surface of the object.

**Brief Description of Drawings**

FIG. 1 is a configuration diagram of a laser processing apparatus of an embodiment.

FIG. 2 is a cross-sectional view of laser light according to the embodiment.

FIG. 3 is a flowchart of a laser processing method of an embodiment.

FIG. 4 is a plan view of a sample for explaining the laser processing method of the embodiment.

FIG. 5 is a plan view of an object for explaining the laser processing method of the embodiment.

FIG. 6 is a graph showing a diameter of an irradiation spot of the laser light emitted by the laser processing method of the embodiment.

FIG. 7 is a graph showing intensity of laser light emitted by a laser processing method of each of Example 1 and Example 2.

FIG. 8 is an image showing a two-dimensional distribution of compressive residual stress imparted to an object by a laser processing method of a comparative example.

FIG. 9 is an image showing a two-dimensional distribution of compressive residual stress imparted to an object by a laser processing method of each of Example 1 and Example 2.

FIG. 10 is a graph showing the compressive residual stress imparted to the object by the laser processing method of each of the comparative example, Example 1, and Example 2.

FIG. 11 is a table showing the compressive residual stress imparted to the object by the laser processing method of each of the comparative example, Example 1, and Example 2.

FIG. 12 is a graph showing the compressive residual stress imparted to the object by the laser processing method of the comparative example and a correction coefficient (Z).

FIG. 13 is a graph showing an experimental value and a calculated value of the compressive residual stress imparted to the object by the laser processing method of each of Example 1 and Example 2.

FIG. 14 is a graph showing each of a sample irradiation intensity and an object irradiation intensity of Modification Example 1.

FIG. 15 is a plan view of an object for explaining a laser processing method of Modification Example 2.

FIG. 16 is a plan view of an object for explaining a laser processing method of Modification Example 3.

**Description of Embodiments**

Hereinafter, an embodiment of the present disclosure will be described in detail with reference to the drawings. The same or corresponding parts in the drawings are denoted with the same reference signs, and repetitive description will be omitted.

[Laser processing apparatus]

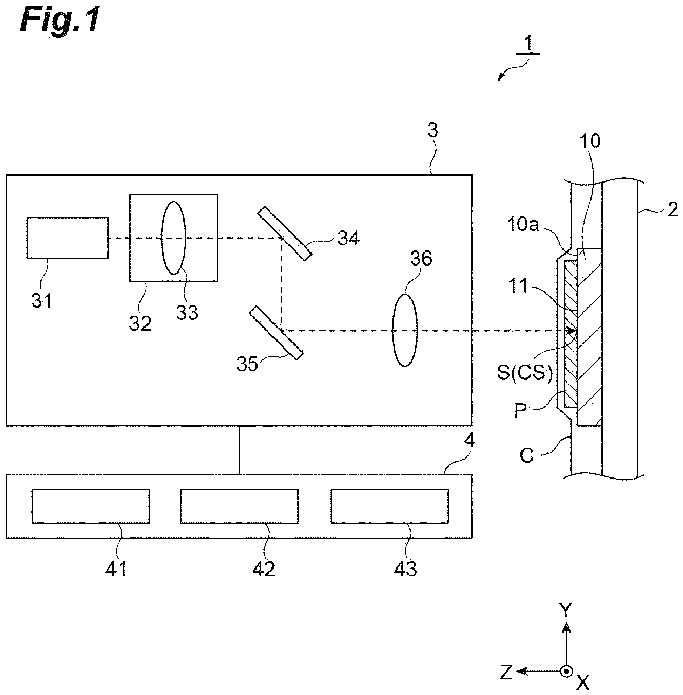

As shown in FIG. 1, a laser processing apparatus 1 includes a support part 2, an irradiation part 3, and a control part 4. The laser processing apparatus is a apparatus that irradiates an objective area 11 on a surface 10a of an object 10 with laser light L to impart compressive residual stress to the object 10 along the objective area 11. That is, the laser processing apparatus 1 is a apparatus for imparting compressive residual stress to an object 10 along an objective area 11 on a surface 10a of the object 10 by irradiating the objective area 11 . In the following description, three directions orthogonal to each other are referred to as an X direction, a Y direction, and a Z direction. In the present embodiment, the Z direction is a first horizontal direction, the X direction is a second horizontal direction perpendicular to the first horizontal direction, and the Y direction is a vertical direction.

The support part 2 supports the object 10 such that the surface 10a of the object 10 is orthogonal to the Z direction. The support part 2 includes, for example, a clamp that clamps the object 10, a robot arm, and the like. The object 10 is, for example, a plate-shaped member made of a metal material such as copper, aluminum, iron, or titanium. When the laser peening processing is performed, a protective layer P is formed on the objective area 11, and a confinement layer C is formed on a surface of the protective layer P. The protective layer P is a layer that absorbs heat generated by the irradiation of the objective area 11 with the laser light L in order to protect the objective area 11 from the heat. The protective layer P is, for example, a metal or resin layer. The confinement layer C is a layer that confines plasma generated by the irradiation of the objective area 11 with the laser light L in order to give an impact of the plasma to the object 10. The confinement layer C is, for example, water supplied in order to cover the protective layer P.

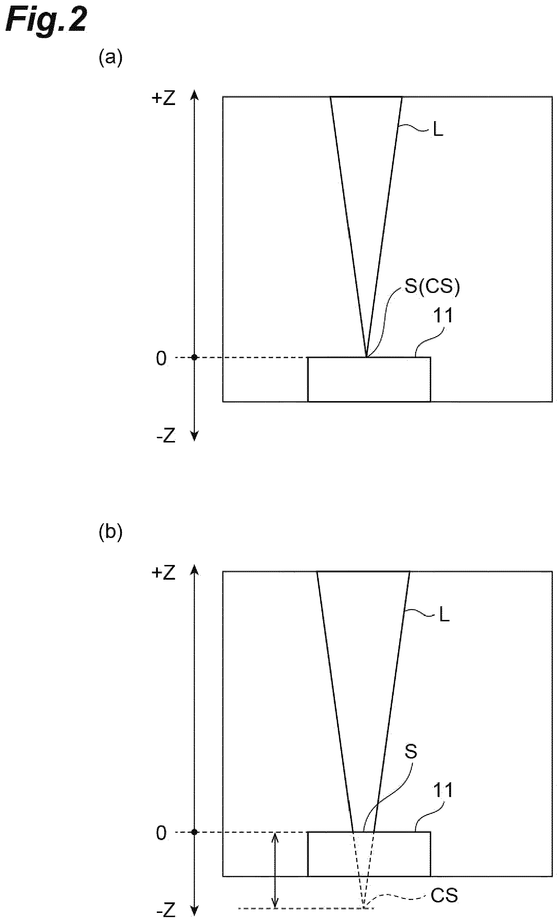

The irradiation part 3 irradiates the objective area 11 on the surface 10a of the object 10 supported by the support part 2 with the laser light L. The irradiation part 3 moves a convergence spot CS of the laser light L three-dimensionally (in the X direction, the Y direction, and the Z direction) with respect to the objective area 11 to move an irradiation spot S of the laser light L two-dimensionally (in the X direction and the Y direction) on the objective area 11. The convergence spot CS is a region of the laser light L where intensity of the laser light L per unit area is maximized. The irradiation spot S of the laser light L is an irradiation region of the laser light L in the objective area 11. For example, as shown in (a) of FIG. 2, in a case where the convergence spot CS is positioned on the objective area 11, the convergence spot CS becomes the irradiation spot S. In this case, a diameter of the irradiation spot S is minimized, and the intensity of the laser light L per unit area at the irradiation spot S is maximized. As shown in (b) of FIG. 2, as the convergence spot CS moves in the Z direction from the objective area 11, the diameter of the irradiation spot S increases, and the intensity of the laser light L per unit area in the irradiation spot S becomes smaller.

The irradiation part 3 shown FIG. 1 has a light source 31, an optical axis adjusting part 32, an optical axis adjusting lens 33, an X-axis movable mirror 34, a Y-axis movable mirror 35, and an objective lens 36. The light source 31 emits the laser light L. The light source 31 is, for example, a semiconductor laser that emits the laser light L by a pulse oscillation method. The optical axis adjusting part 32 supports the optical axis adjusting lens 33. The optical axis adjusting part 32 moves the optical axis adjusting lens 33 in the Z direction to move the convergence spot CS of the laser light L in the Z direction. The X-axis movable mirror 34 adjusts an inclination of a mirror surface that reflects the laser light L to move the convergence spot CS of the laser light L in the X direction. The Y-axis movable mirror 35 adjusts an inclination of a mirror surface that reflects the laser light L to move the convergence spot CS of the laser light L in the Y direction. Each of the X-axis movable mirror 34 and the Y-axis movable mirror 35 is, for example, a galvanomirror. The objective lens 36 optically corrects a position of the convergence spot CS of the laser light L such that the convergence spot CS of the laser light L is positioned on a plane perpendicular to the Z direction. The objective lens 36 is, for example, an f·θ lens.

The control part 4 controls an operation of the irradiation part 3 such that the convergence spot CS of the laser light L moves three-dimensionally along a predetermined trajectory with respect to the objective area 11 (in other words, the irradiation spot S of the laser light L moves two-dimensionally along a predetermined trajectory in the objective area 11). As the convergence spot CS moves three-dimensionally along a predetermined trajectory with respect to the objective area 11, the irradiation spot S moves two-dimensionally along a predetermined trajectory in the objective area 11, and in the irradiation spot S, the intensity of the laser light L per unit area increases or decreases. The control part 4 has, for example, a processing part 41, a storage part 42, and an input reception part 43. The processing part 41 is configured as a computer device including a processor, a memory, a storage, a communication device, and the like. In the processing part 41, the processor executes software (a program) read from the memory or the like and controls reading and writing of data in the memory and the storage, and communication of a communication device. The storage part 42 is a hard disk or the like and stores various types of data. The input reception part 43 is an interface that receives an input of various types of data from an operator. In the present embodiment, the input reception part 43 constitutes a graphical user interface (GUI).

[Laser processing method]

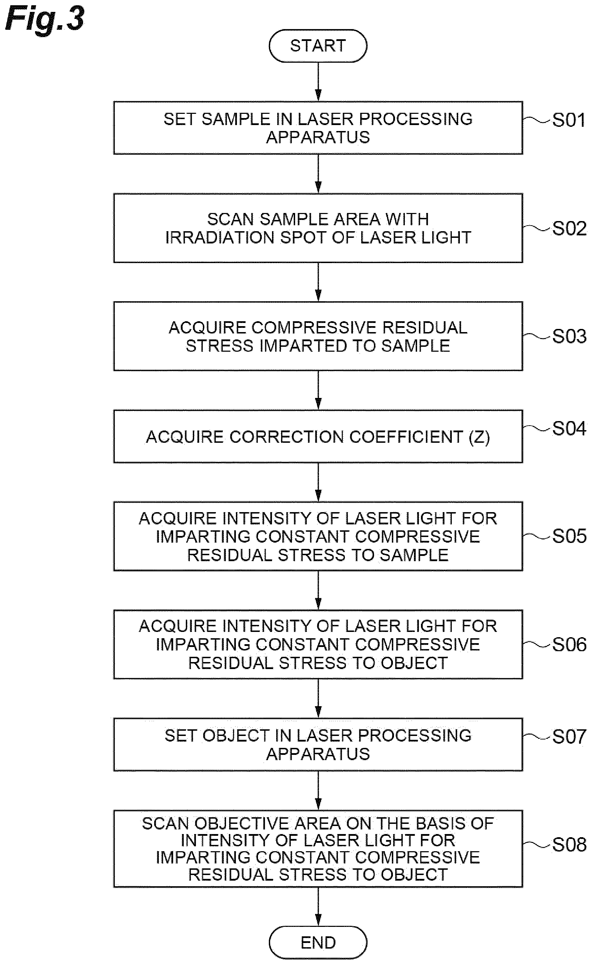

A laser processing method executed in the laser processing apparatus 1 described above will be described with reference to a flowchart shown in FIG. 3. The laser processing method is a method in which the objective area 11 on the surface 10a of the object 10 is irradiated with the laser light L to impart the compressive residual stress to the object 10 along the objective area 11. That is, the laser processing method is a method in which the laser peening processing is performed on the objective area 11 on the surface 10a of the object 10. In the laser processing method of the present embodiment, a preparation step and a processing step which will be described below are executed.

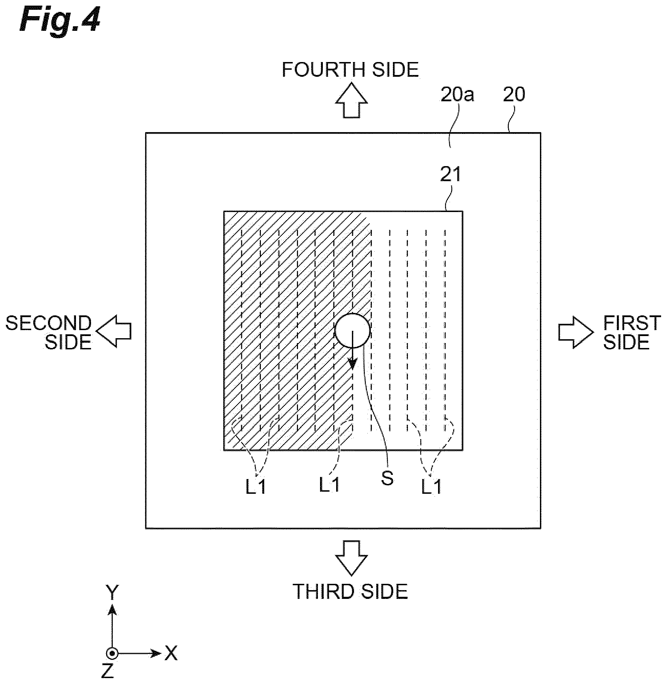

First, a sample 20 (see FIG. 4) is prepared, and the sample 20 is set in the laser processing apparatus 1 (step S01 shown in FIG. 3). That is, the sample 20 is fixed to the support part 2 such that a surface 20a (see FIG. 4) of the sample 20 is orthogonal to the Z direction. When the sample 20 is set in the laser processing apparatus 1, a sample area 21 (see FIG. 4), irradiation conditions of the laser light L, and the like are set by the control part 4. In the present embodiment, the sample 20 is a member made of the same material as the object 10 and having the same shape as the object 10. The sample area 21 is an area having the same shape as the objective area 11. In the present embodiment, as shown in FIG. 4, one side in the X direction is a first side, and the other side in the X direction is a second side. That is, the first side and the second side are sides opposite each other in the X direction. Further, one side in the Y direction is a third side, and the other side in the Y direction is a fourth side. That is, the third side and the fourth side are sides opposite each other in the Y direction. As an example, the sample area 21 is a rectangular area having two sides opposite each other in the X direction and two sides opposite each other in the Y direction.

Subsequently, the control part 4 controls the irradiation part 3 such that the sample area 21 on the surface of sample 20 is scanned with the irradiation spot S of the laser light L while keeping the intensity of the laser light L per unit area constant (step S02 shown in FIG. 3, a preparation step) in a state in which the protective layer P is formed on the sample area 21 and the confinement layer C is formed on the surface of the protective layer P. Specifically, as shown in FIG. 4, a first process of moving the irradiation spot S of the laser light L along each of a plurality of lines L1 extending in the Y direction (a first direction) and arranged in the X direction (a second direction perpendicular to the first direction) is executed in the sample area 21 to scan the sample area 21 with the irradiation spot S of the laser light L. In the present embodiment, as the first process, a process of moving the irradiation spot S of the laser light L from the third side to the fourth side (from one side to the other side in the first direction) and a process of moving the irradiation spot S of the laser light L from the fourth side to the third side (from the other side to the one side in the first direction) are alternately executed. The interval between the adjacent lines L1 is about 1/2 of the width of the irradiation spot S of the laser light L in the X direction.

Subsequently, compressive residual stress imparted to the sample 20 on the surface 20a of the sample 20 is acquired (step S03 shown in FIG. 3, a preparation step). In the present embodiment, an operator measures the compressive residual stress imparted to the sample 20 using an X-ray residual stress measurement apparatus and inputs the result into the input reception part 43.

Subsequently, a correction coefficient (Z) is acquired (step S04). This "correction coefficient (Z)" is a coefficient that indicates the ease of imparting the compressive residual stress. In the present embodiment, the processing part 41 acquires the correction coefficient (Z) on the basis of the compressive residual stress imparted to the sample 20. Specifically, the compressive residual stress imparted to the sample 20 is divided by the compressive residual stress imparted to the sample 20 in an area initially scanned with the irradiation spot S, and thus the correction coefficient (Z) is calculated.

Subsequently, the intensity of the laser light L per unit area for imparting constant compressive residual stress to the sample 20 is acquired (step S05). In the following description, the "intensity of the laser light L per unit area for imparting constant compressive residual stress to the sample 20" is referred to as a "sample irradiation intensity." In the present embodiment, the processing part 41 acquires the sample irradiation intensity. The processing part 41 derives the sample irradiation intensity through the following derivation process.

Since an amount of plastic deformation generated in the sample 20 (hereinafter referred to as a plastic deformation amount) is proportional to a pulse width of the laser light L with which the sample 20 is irradiated and a shock wave pressure generated in the sample 20, a relationship of the following expression (1) is satisfied.
[Math. 1]

$$L_p \propto \pi_p \times P \qquad \cdots (1)$$

$L_p$ in Expression (1) is a plastic deformation amount ($\mu$m) generated in the sample 20. $\pi_p$ is a pulse width (ns) of the laser light L with which the sample 20 is irradiated. P is a shock wave pressure (GPa) generated in the sample 20.

The compressive residual stress has a correlation with a plastic strain amount (a value obtained by dividing the plastic deformation amount by a length of the member before deformation). Therefore, the compressive residual stress imparted to the sample 20 and the plastic deformation amount of the sample 20 can be expressed by a relationship of the following expression (2).
[Math. 2]

$$\sigma \propto L_p \qquad \cdots (2)$$

$\sigma$ in Expression (2) is the compressive residual stress (MPa) imparted to the sample 20.

In a case where water is used as the confinement layer C, the shock wave pressure generated in the sample 20 satisfies a relationship of the following expression (3) together with the intensity of the laser light L with which the sample 20 is irradiated.
[Math. 3]

$$P = 1.02 \times \sqrt{I} \qquad \cdots (3)$$

I in Expression (3) is the intensity of the laser light L per unit area (GW/cm$^2$).

Here, an effective shock wave pressure can be expressed by a relationship of the following expression (4). This "effective shock wave pressure" is a shock wave pressure taking into account the correction coefficient (Z).
[Math. 4]

$$P_1 = P \cdot Z \qquad \cdots (4)$$

$P_1$ in Expression (4) is the effective shock wave pressure (GPa), and Z is the correction coefficient (Z).

According to the above Expression (1), Expression (2), Expression (3), and Expression (4), it is possible to make the compressive residual stress imparted to the sample 20 constant by adjusting the intensity of the laser light L per unit area according to the correction coefficient (Z). That is, the sample irradiation intensity is derived on the basis of the correction coefficient (Z). In the present embodiment, the processing part 41 acquires the sample irradiation intensity on the basis of the derivation process described above.

Subsequently, the intensity of the laser light L per unit area for imparting constant compressive residual stress to the object 10 is acquired (step S06). In the following description, the "intensity of the laser light L per unit area for imparting constant compressive residual stress to the object 10" is referred to as an "object irradiation intensity." Specifically, the processing part 41 converts the sample irradiation intensity into the object irradiation intensity and acquires the object irradiation intensity. In the present embodiment, the sample area 21 is an area having the same shape as the objective area 11. Therefore, the processing part 41 acquires the object irradiation intensity by converting the area to which the sample irradiation intensity is applied into the same size. The object irradiation intensity acquired by the processing part 41 is stored in the storage part 42.

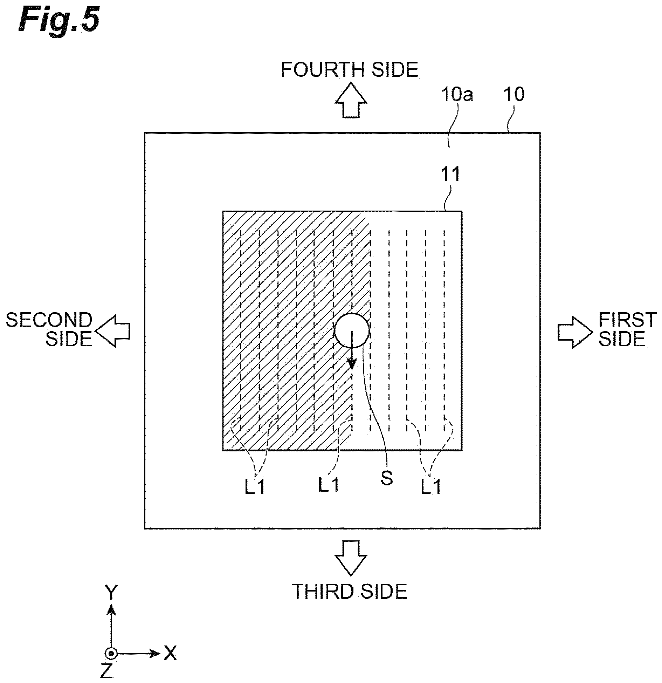

Subsequently, the object 10 is prepared, and the object 10 is set in the laser processing apparatus 1 (step S07). That is, as shown in FIG. 1, the object 10 is fixed to the support part 2 such that the surface 10a of the object 10 is orthogonal to the Z direction. When the object 10 is set in the laser processing apparatus 1, the objective area 11, the irradiation conditions of the laser light L, and the like are set by the control part 4. In the present embodiment, as shown in FIG. 5, one side in the X direction is a first side, and the other side in the X direction is a second side. That is, the first side and the second side are sides opposite each other in the X direction. Further, one side in the Y direction is a third side, and the other side in the Y direction is a fourth side. That is, the third side and the fourth side are sides opposite each other in the Y direction. As an example, the objective area 11 is a rectangular area having two sides opposite each other in the X direction and two sides opposite each other in the Y direction.

Subsequently, the control part 4 controls the irradiation part 3 such that the objective area 11 is scanned with the irradiation spot S of the laser light L while increasing a moving average in the intensity of the laser light L per unit area on the basis of the compressive residual stress imparted to the sample 20 (step S08 shown in FIG. 3, a processing step) in a state in which the protective layer P (see FIG. 1) is formed on the objective area 11 and the confinement layer C (see FIG. 1) is formed on the surface of the protective layer P. This "moving average" is a value obtained by averaging each intensity of the laser light L per unit area in a predetermined range scanned with the irradiation spot S of the laser light L. In the present embodiment, the objective area 11 is scanned with the irradiation spot S of the laser light L while increasing the moving average in the intensity of the laser light L per unit area on the basis of the object irradiation intensity. Specifically, as shown in FIG. 5, a second process of moving the irradiation spot S of the laser light L along each of a plurality of lines L1 extending in the Y direction (a first direction) and arranged in the X direction (a second direction perpendicular to the first direction) is executed in the objective area 11. The control part 4 increases the moving average in the intensity of the laser light L per unit area by increasing the intensity of the laser light L per unit area for each line L1 on the basis of the object irradiation intensity. Specifically, the intensity of the laser light L per unit area is increased by moving the position of the convergence spot CS of the laser light L closer to the objective area 11 in the Z direction (a direction intersecting with the objective area 11) for each line L1.

In the present embodiment, as the second process, a process of moving the irradiation spot S of the laser light L from the third side to the fourth side (from one side to the other side in the first direction) and a process of moving the irradiation spot S of the laser light L from the fourth side to the third side (from the other side to the one side in the first direction) are alternately executed.

As described above, by executing the preparation step and the processing step, the compressive residual stress is imparted to the object 10 along the objective area 11. In other words, the above laser processing method is a method for manufacturing the object 10 to which the compressive residual stress is imparted along the objective area 11.

[Operation and effect]

In the laser processing method, the objective area 11 is scanned with the irradiation spot S of the laser light L while increasing the moving average in the intensity of the laser light L per unit area. As a result, the compressive residual stress imparted to the object 10 is curbed from decreasing as compared with the case where the intensity of the laser light L per unit area is constant. Therefore, according to the above laser processing method, it is possible to curb the variation in the compressive residual stress imparted to the object 10 along the objective area 11 on the surface 10a of the object 10.

In the above laser processing method, in the processing step, the second process of moving the irradiation spot S of the laser light L along each of the plurality of lines L1 extending in the Y direction and arranged in the X direction is executed to scan the objective area 11 with the irradiation spot S of the laser light L, and in the processing step, the intensity of the laser light L per unit area is increased for each line L1 of the plurality of lines L1 to increase the moving average in the intensity of the laser light L per unit area. Thereby, the scanning with the irradiation spot S of the laser light L and the control of the intensity of the laser light L per unit area can be executed simply and easily.

In the above laser processing method, in the processing step, as the second process, the process of moving the irradiation spot S of the laser light L from one side to the other side in the Y direction and the process of moving the irradiation spot S of the laser light L from the other side to the one side in the Y direction are alternately executed. Thereby, the objective area 11 can be efficiently scanned with the irradiation spot S of the laser light L.

In the above laser processing method, in the processing step, the position of the convergence spot CS of the laser light L is moved in the Z direction to increase the moving average in the intensity of the laser light L per unit area. As a result, the moving average in the intensity of the laser light L per unit area can be increased without adjusting the output of the laser light L. The operation and effect are demonstrated below.

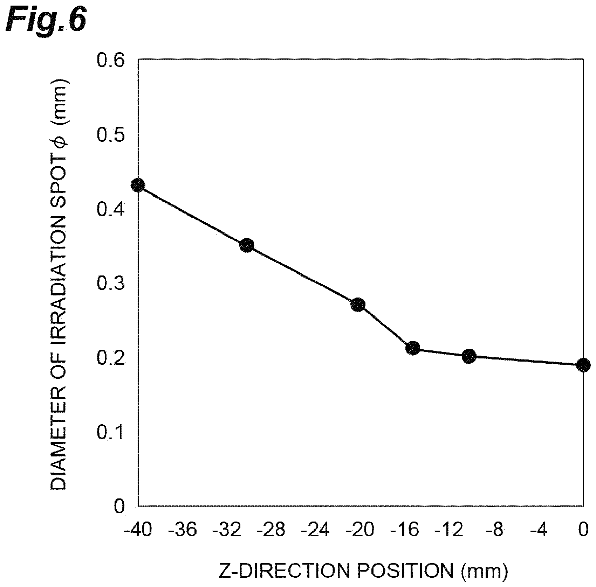

As shown in FIG. 6, the correlation between the Z-direction position of the convergence spot CS and the diameter of the irradiation spot S was acquired. According to the correlation, the diameter of the irradiation spot S is approximated by a linear function with the Z-direction position of the convergence spot CS as a variable. It is demonstrated that, in a case where the output of the laser light L is constant, since the intensity of the laser light L per unit area is inversely proportional to the square of the diameter of the irradiation spot S, the position of the convergence spot CS of the laser light L is moved in the Z direction to increase the moving average in the intensity of the laser light L per unit area.

In the laser processing method, the preparation step of scanning the sample area 21 on the surface of the sample 20 with the irradiation spot S of the laser light L while keeping the intensity of the laser light L per unit area constant to acquire the compressive residual stress imparted to the sample 20 on the surface 20a of the sample 20 is executed. In the processing step, the moving average in the intensity of the laser light L per unit area is increased on the basis of the compressive residual stress imparted to the sample 20. Accordingly, it is possible to more reliably curb the variation in the compressive residual stress imparted to the object 10.

According to the above laser processing apparatus 1, as in the laser processing method described above, it is possible to curb the variation in the compressive residual stress imparted to the object 10 along the objective area 11 on the surface 10a of the object 10.

[Comparative example and Examples]

Next, laser processing methods of a comparative example, Example 1, and Example 2 will be described. Irradiation conditions of the laser light emitted by the laser processing methods of the comparative example, Example 1, and Example 2 are as follows.

Conditions of laser light

Wavelength: 1064 nm
Pulse energy: 42 mJ
Pulse width: 39.4 ns (Gaussian)
Converged light size: $\varphi$ 0.19 to 0.30 mm
Intensity: 1.5 to 3.8 GW/cm$^2$
Repetition frequency: 300 Hz

Conditions of object

Material: aluminum alloy (A2024)
Shape: 49 $\times$ 49 mm
Thickness: 3 mm
Objective area: 3 $\times$ 3 mm
Protective layer: aluminum tape (thickness: 100 $\mu$m or less)
Confinement layer: flowing water

In the laser processing method of the comparative example, a step of scanning the objective area with the irradiation spot of the laser light while keeping the moving average in the intensity of the laser light per unit area constant (a preparation step) was executed four times. In the laser processing method of each of Example 1 and Example 2, a step of scanning the objective area 11 with the irradiation spot of the laser light while increasing the moving average in the intensity of the laser light per unit area (a processing step) was executed four times. In the laser processing method of each of Example 1 and Example 2, the intensity of the laser light per unit area was adjusted by moving the convergence spot in the Z direction.

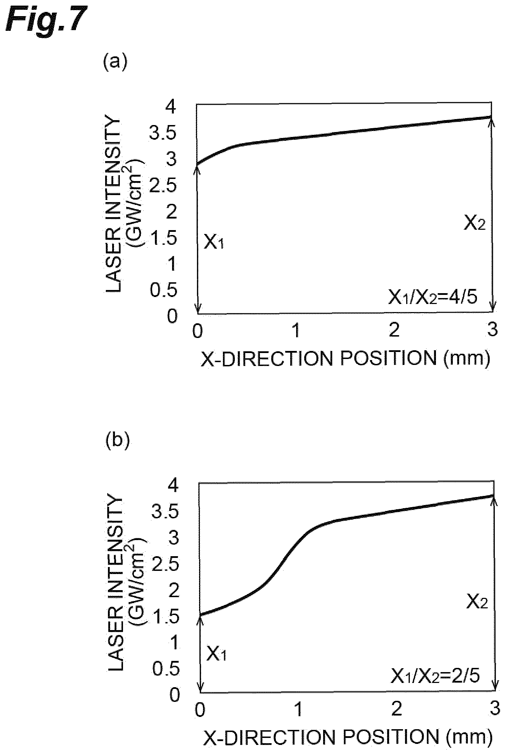

The laser light emitted by the laser processing method of the comparative example was adjusted such that the intensity of the laser light per unit area is maintained at 3.8 GW/cm$^2$. The laser light emitted by the laser processing method of Example 1 was adjusted such that the intensity of the laser light per unit area is in a range of 3.0 GW/cm$^2$ to 3.8 GW/cm$^2$ as shown in (a) of FIG. 7. The laser light emitted by the laser processing method of Example 2 was adjusted such that the intensity of the laser light per unit area is in a range of 1.5 GW/cm$^2$ to 3.8 GW/cm$^2$ as shown in (b) of FIG. 7.

A two-dimensional distribution of compressive residual stress imparted an object by the laser processing method of each of the comparative example, Example 1, and Example 2 was measured by an X-ray residual stress measurement apparatus. The conditions for measuring the two-dimensional distribution of the compressive residual stress are as follows.

Conditions for measuring two-dimensional distribution of compressive residual stress

X-ray size: $\varphi$ 0.5 mm

Range: 5.0 × 2.5 mm
Interval: 0.25 mm
Tube: Co

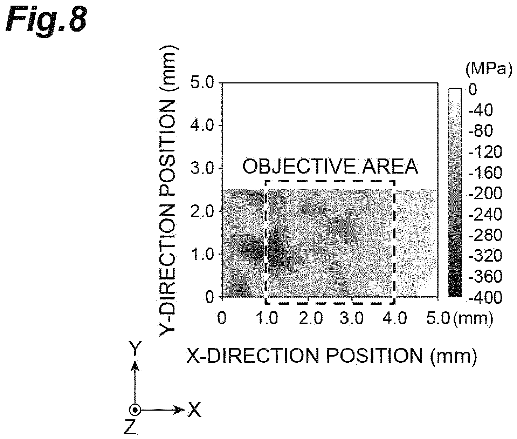

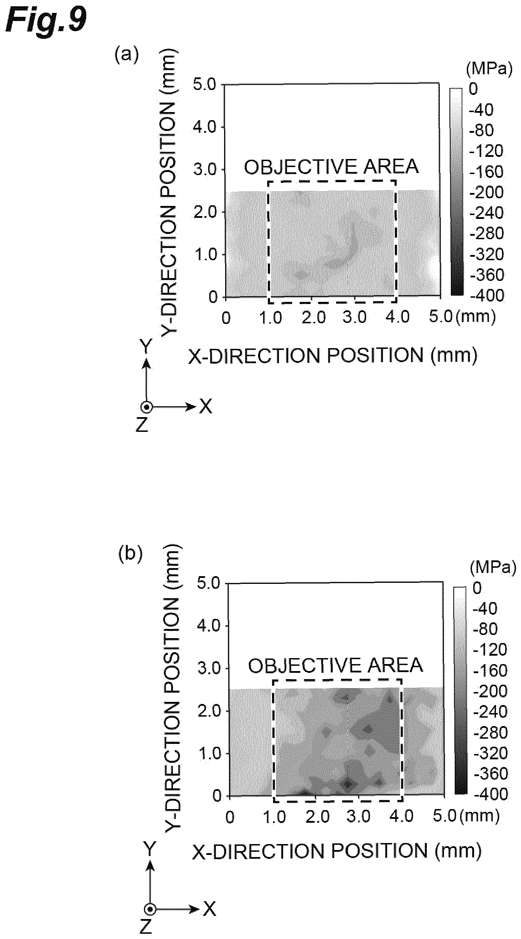

In the two-dimensional distribution of the compressive residual stress imparted along the objective area by the laser processing method of the comparative example, the compressive residual stress decreases from a side initially scanned with the laser light (a side on which X = 1.0 mm) toward a side finally scanned with the laser light (a side on which X = 4.0 mm), as shown in FIG. 8. As a result, it is experimentally verified that, if the intensity of the laser light per unit area is constant, as the area scanned with the irradiation spot of the laser light increases in the objective area (that is, as the area scanned with the irradiation spot of the laser light is denser in the objective area), the compressive residual stress tends to be more difficult to impart. In the two-dimensional distribution of the compressive residual stress imparted along the objective area by the laser processing method of Example 1, the variation is curbed as compared with the two-dimensional distribution of the compressive residual stress imparted by the laser processing method of the comparative example, as shown in (a) of FIG. 9. In the two-dimensional distribution of the compressive residual stress imparted along the objective area by the laser processing method of Example 2, the variation is curbed as compared with the two-dimensional distribution of the compressive residual stress imparted by the laser processing method of the comparative example, as shown in (b) of FIG. 9, but the variation expands as compared with the two-dimensional distribution of the compressive residual stress imparted by the laser processing method of Example 1. In FIG. 8, and (a) and (b) of FIG. 9, the compressive residual stress is indicated by a negative value.

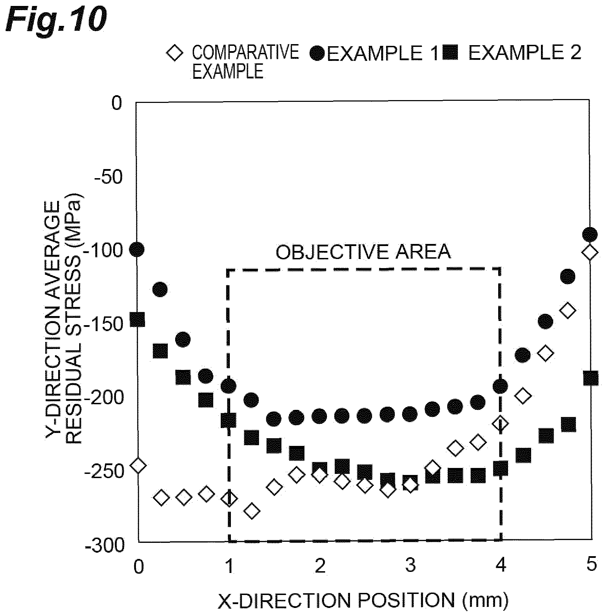

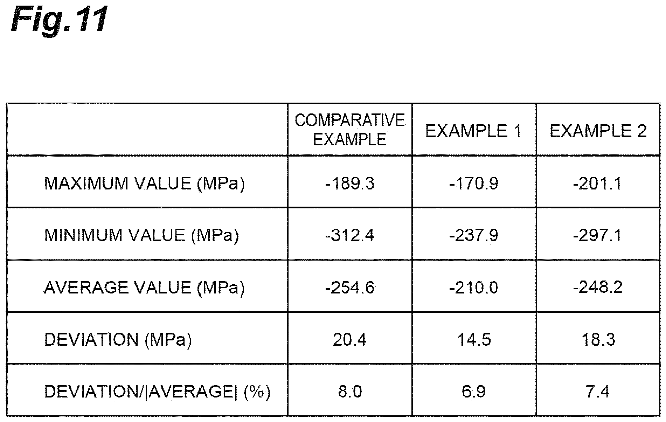

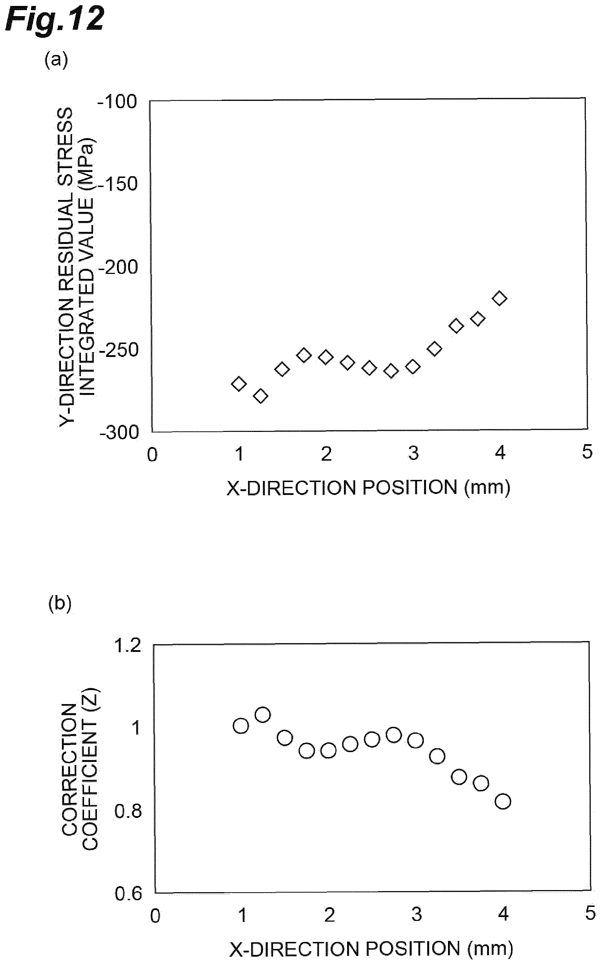

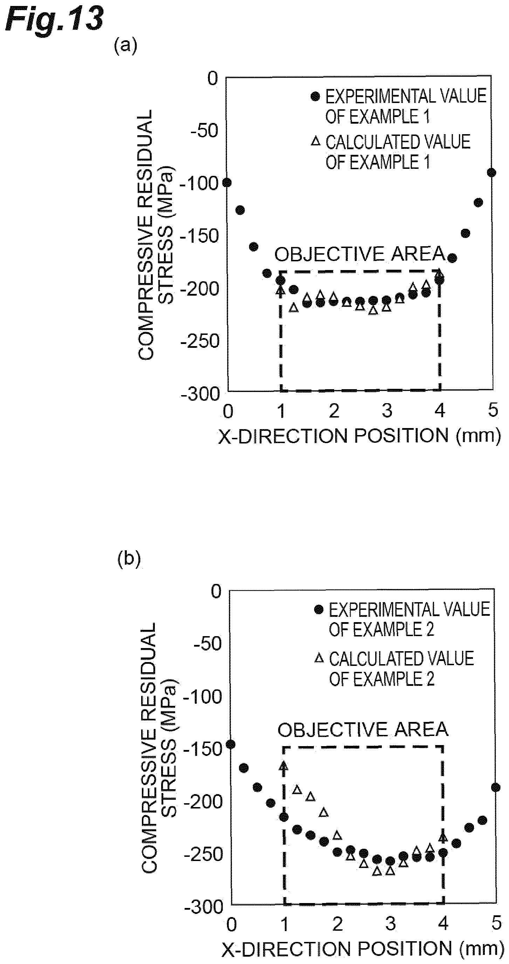

FIG. 10 is a graph showing the compressive residual stress imparted to the object by the laser processing method of each of the comparative example, Example 1, and Example 2. In FIG. 10, an "X-direction position" is a position in the X direction, and a "Y-direction average residual stress" is an "average value of the compressive residual stresses imparted to a portion in the Y direction" at each X-direction position. As shown in FIG. 10, focusing on a difference between the maximum value and the minimum value of the Y-direction average residual stress in the objective area, in the difference, the value in the case of the laser processing method of each of Example 1 and Example 2 is smaller than the value in the case of the laser processing method of the comparative example, and the value in the case of the laser processing method of Example 1 is smaller than the value in the case of the laser processing method of Example 2. In FIG. 10, the compressive residual stress is indicated by a negative value (the same applies to FIG. 11, and (a) of FIG. 12, and (a) and (b) of FIG. 13, which will be described later).

FIG. 11 is a table showing the compressive residual stress imparted to the object by the laser processing method of each of the comparative example, Example 1, and Example 2. In FIG. 11, the "maximum value" is the minimum value of the compressive residual stress imparted along the objective area (along a 3 × 3 mm dotted line frame) shown in each of FIGS. 8, and (a) and (b) of FIG. 9, the "minimum value" is the maximum value of the compressive residual stress imparted along the objective area, and an "average value" is an average value of the compressive residual stresses imparted along the objective area. A "deviation" is a magnitude of the variation in the compressive residual stress imparted along the objective area from the average value, and "deviation/|average|" is a proportion of the variation in the compressive residual stress imparted along the objective area from the average value. As shown in FIG. 11, in the "deviation" and "deviation/|average|," the value in the case of the laser processing method of each of Example 1 and Example 2 is smaller than the value in the case of the laser processing method of the comparative example, and the value in the case of the laser processing method of Example 1 is smaller than the value in the case of the laser processing method of Example 2. That is, the compressive residual stress imparted along the objective area in Example 2 is more uniform than the compressive residual stress imparted along the objective area in the comparative example. Further, the compressive residual stress imparted along the objective area in Example 1 is more uniform than the compressive residual stress imparted along the objective area in Example 2.

From the above result, it is demonstrated that, if the intensity of the laser light per unit area is constant, as the area scanned with the irradiation spot of the laser light increases in the objective area, the compressive residual stress tends to be more difficult to impart. In addition, it is proved that it is possible to curb the variation in the compressive residual stress imparted to the object along the objective area on the surface of the object by scanning the objective area the irradiation spot of the laser light while increasing the moving average in the intensity of the laser light per unit area.

(a) of FIG. 12 is a graph showing the compressive residual stress imparted to the object by the laser processing method of the comparative example. In the laser processing method of the comparative example, the objective area on the surface of the object was scanned with the irradiation spot of the laser light while keeping the intensity of the laser light constant. Assuming that the "object used in the laser processing method of the comparative example" is the "sample used in step S02 of the laser processing method of the above embodiment," (a) of FIG. 12 is a graph showing the compressive residual stress imparted to the sample on the surface of the sample by scanning the sample area on the surface of the sample with the irradiation spot of the laser light while keeping the intensity of the laser light per unit area constant.

As shown in (a) of FIG. 12, as it is closer to the area (an area of X = 1 mm) initially scanned with the laser light and a region in the sample area to which the compressive residual stress is imparted becomes a sparse state, the compressive residual stress is easily imparted. As it is closer to the area (an area of X = 4 mm) finally scanned with the laser light and a region in the sample area to which the compressive residual stress is imparted becomes a dense state, the compressive residual stress is difficult to be imparted. (b) of FIG. 12 is a graph showing the correction coefficient (Z) obtained on the basis of the compressive residual stress imparted to the sample. As shown in (b) of FIG. 12, the correction coefficient (Z) is obtained by dividing the compressive residual stress imparted to the sample on the surface of the sample by the compressive residual stress imparted to the sample in the area initially scanned with the laser light.

A theoretical value of the compressive residual stress imparted to the object is calculated as a calculated value based on the correction coefficient (Z) and the intensity of the laser light per unit area (hereinafter referred to as a calculated value). An experimental value of (a) of FIG. 13 shows the compressive residual stress imparted to the object by the laser processing method of Example 1. A calculated value of (a) of FIG. 13 shows a calculated value based on the intensity of the laser light with which the object is irradiated by the laser processing method of Example 1 (see (a) of FIG. 7). As shown in (a) of FIG. 13, it is verified in Example 1 that the compressive residual stress imparted to the object and the calculated value of the compressive residual stress qualitatively match each other. An experimental value of (b) of FIG. 13 shows the compressive residual stress imparted to the object by the laser processing method of Example 2. A calculated value of (b) of FIG. 13 shows a calculated value based on the intensity of the laser light with which the object is irradiated by the laser processing method of Example 2 (see (b) of FIG. 7). As shown in (b) of FIG. 13, it is verified in Example 2 that the compressive residual stress imparted to the object and the calculated value of the compressive residual stress qualitatively match each other.

[Modification Examples]

The present disclosure is not limited to the embodiment and the examples described above. In the laser processing method of the above embodiment, the sample 20 is a member made of the same material as the object 10, but may be a member made of a material different from that of the object 10. The sample 20 is a member having the same shape as the object 10, but may be a member having a shape different from that of the object 10. Further, the sample area 21 is an area having the same shape as the objective area 11, but may be an area having a shape different from that of the objective area 11. In this case, the processing part 41 converts the sample irradiation intensity into the object irradiation intensity and acquires the object irradiation intensity.

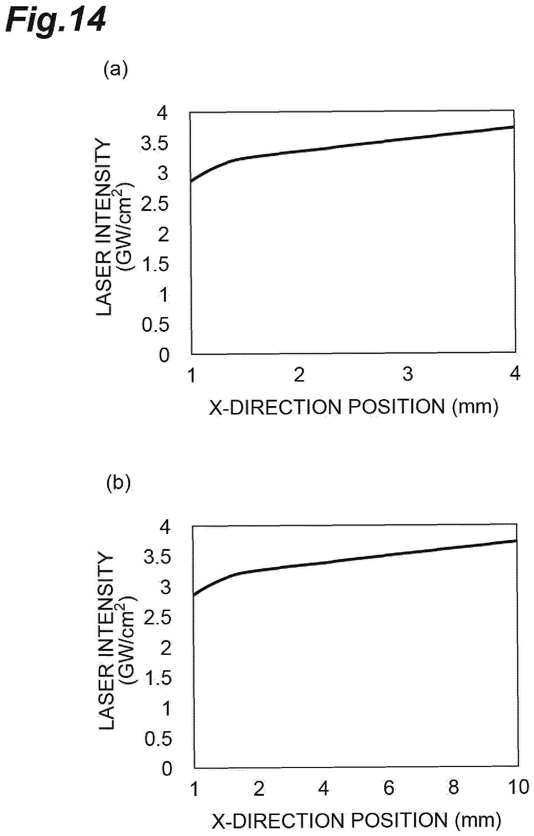

Modification Example 1 in which the objective area 11 is larger than the sample area 21 will be described. In the laser light emitted by the laser processing method of Example 1, the intensity of the laser light per unit area increases to be in a range of 3.0 GW/cm$^2$ to 3.8 GW/cm$^2$ as shown in (a) of FIG. 14. When the object 10 used in the laser processing method of Example 1 is used as the sample, the intensity of the laser light per unit area described above is a sample irradiation intensity. (b) of FIG. 14 shows an object irradiation intensity acquired by converting the sample irradiation intensity as Modification Example 1. As shown in (a) and (b) of FIG.14, an area of 3 mm (X = 1.0 mm to 4.0 mm, see (a) of FIG. 14) to which the sample irradiation intensity is applied is changed to an area of 9 mm (X = 1.0 mm to 10.0 mm, see (b) of FIG. 14) to acquire the object irradiation intensity.

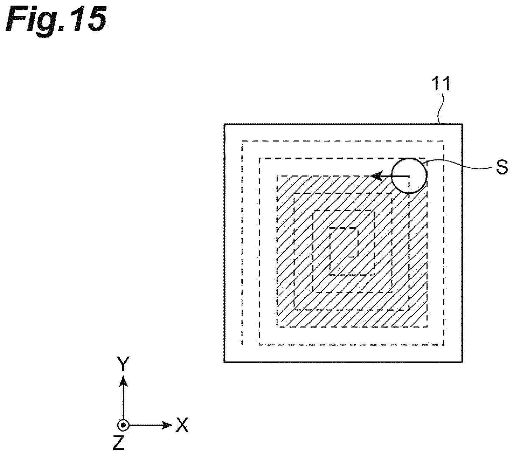

A laser processing method of Modification Example 2 will be described. In the laser processing method of Modification Example 2, as shown in FIG. 15, from the center of the objective area 11 to the outer edge of the objective area 11 (that is, from the inward side toward the outward side of the objective area 11), the objective area 11 is scanned with the irradiation spot S of the laser light L by moving the irradiation spot S of the laser light L along a spiral line L1 while increasing the moving average in the intensity of the laser light L per unit area. In this case, it is preferable to switch the intensity of the laser light L every time the irradiation spot S makes one turn along the spiral line L1. That is, in FIG. 15, it is preferable to switch the intensity of the laser light L each time the position of the irradiation spot S in the X direction matches the position of the start point in the X direction and the position of the irradiation spot S in the Y direction is positioned on a negative side of the position of the start point in the Y direction. The irradiation spot S of the laser light L may be moved along nested annular lines in the objective area 11. As an example, a process of moving the irradiation spot S along each of a plurality of annular lines may be sequentially executed from an inward annular line toward an outward annular line (that is, from the inward side to the outward side of the objective area 11) to scan the objective area 11 with the irradiation spot S of the laser light L. In this case, it is preferable to fix the intensity of the laser light L while the irradiation spot S of the laser light L moves along a predetermined annular line and to switch the intensity each time the spot moves to a different-sized annular line. That is, it is preferable to increase the moving average by increasing the intensity of the laser light L per unit area each time the irradiation spot S makes one turn along a predetermined annular line. In the laser processing method of Modification Example 2, the irradiation spot S of the laser light L is moved from the inward side to the outward side of the objective area 11 to scan the objective area 11 with the irradiation spot S of the laser light L, but the irradiation spot S of the laser light L may be moved from the outward side to the inward side of the objective area 11 to scan the objective area 11 with the irradiation spot S of the laser light L.

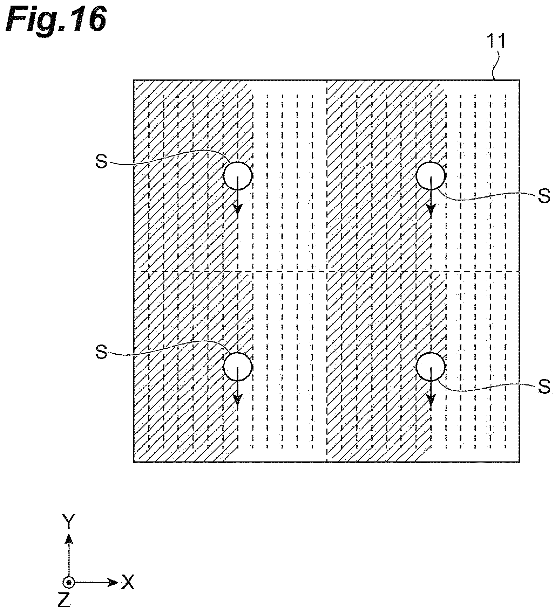

A laser processing method of Modification Example 3 will be described. In the laser processing method of Modification Example 3, the objective area 11 is divided into a plurality of areas, and the laser processing method of the above embodiment is executed in each of the plurality of areas. For example, as shown in FIG. 16, the objective area 11 is divided into four areas arranged in two rows and two columns in the X direction and the Y direction. By executing the laser processing method of the above embodiment in parallel in each of the four areas, it is possible to shorten the time for imparting the compressive residual stress to the object 10 along the objective area 11 even in a case where the objective area 11 is wide.

In the laser processing apparatus 1 of the embodiment, the control part 4 controls an operation of the irradiation part 3 such that the convergence spot CS of the laser light L moves three-dimensionally along a predetermined trajectory with respect to the objective area 11 (in other words, the irradiation spot S of the laser light L moves two-dimensionally along a predetermined trajectory in the objective area 11), but the control part 4 only has to control an operation of at least one of the support part 2 and the irradiation part 3. For example, the control part 4 may control the operation of the support part 2 such that the convergence spot CS of the laser light L moves three-dimensionally on the objective area 11 along the predetermined trajectory. Alternatively, the control part 4 may control the operation of the support part 2 and the operation of the irradiation part 3 such that the convergence spot CS of the laser light L moves three-dimensionally on the objective area 11 along the predetermined trajectory.

Further, in the laser processing apparatus 1 of the above embodiment, in the processing step, the intensity of the laser light L per unit area is increased by moving the position of the convergence spot CS of the laser light L in the Z direction intersecting with the objective area 11, but the intensity of the laser light L per unit area may be increased by increasing the output of the laser light L emitted by the irradiation part 3.

In the laser processing method of the above embodiment, in the processing step, the process of moving the irradiation spot S of the laser light L from the third side to the fourth side and the process of moving the irradiation spot S of the laser light L from the fourth side to the third side are alternately executed, but the process of moving the irradiation spot S of the laser light L from the third side to the fourth side and the process of moving the irradiation spot S of the laser light L from the fourth side to the third side may be performed consecutively.

In the laser processing method of the above embodiment, in the processing step, the intensity of the laser light L per unit area is increased for each line L 1, but the intensity of the laser light L per unit area may be increased for a plurality of lines L1.

In the laser processing method of the above embodiment, the interval between the adjacent lines L1 is about 1/2 of the width of the irradiation spot S of the laser light L in the X direction, but this interval may be a regular interval. In a case where the interval between adjacent lines L1 is the regular interval, the interval is preferably 1/2 of the width of the irradiation spot S in a case where the width of the irradiation spot S is the smallest in the laser processing method of the above embodiment (that is, the width of the irradiation spot S in a case where the position of the convergence spot CS is the closest to the objective area 11 in the Z direction). In this case, a portion between the adjacent lines L1 is reliably scanned with the irradiation spot S two or more times. Further, the interval between adjacent lines L1 may be 1/2 of the width of the irradiation spot S in a case where the width of the irradiation spot S is the largest in the laser processing method of the above embodiment (that is, the width of the irradiation spot S in a case where the position of the convergence spot CS is the farthest from the objective area 11 in the Z direction). In this case, in the plurality of lines L1, since the interval between the adjacent lines L1 become sparse, the processing time of the entire laser processing method can be shortened.

The interval between adjacent lines L1 may not be a regular interval. In a case where the interval between the adjacent lines L1 is not the regular interval, the interval at which the region where the irradiation spot S moves is uniformly overlapped (that is, 1/2 of the width of the irradiation spot S that changes according to the intensity of the laser light L per unit area) is preferably adjusted. In this case, a region between the adjacent lines L1 is scanned with the irradiation spot S two times without overlapping. In this case, the objective area 11 can be uniformly scanned with the irradiation spot S.

In the laser processing method of the above embodiment, in the processing step, the intensity of the laser light L per unit area is increased for each line L1, but the moving average in the intensity of the laser light L per unit area only has to be increased. For example, the intensity of the laser light L per unit area may be increased continuously. Alternatively, even if the intensity of the laser light L per unit area is reduced, the moving average in the intensity of the laser light L per unit area only has to be increased in a predetermined range obtained by scanning the objective area 11 with the irradiation spot S of the laser light L.

In the laser processing method of the present embodiment, in the preparation step, an operator measures the compressive residual stress imparted to the sample 20 using an X-ray residual stress measurement apparatus and inputs the result into the input reception part 43. However, the laser processing apparatus 1 further equipped with an X-ray residual stress measurement device may measure the compressive residual stress imparted to the object 10 and acquire the compressive residual stress imparted to the sample 20. In this case, the processing part 41 acquires the compressive residual stress imparted to the sample 20 from the X-ray residual stress measurement device.

In the laser processing method of the above embodiment, one preparation step is executed for one processing step, but one preparation step may be executed for multiple processing steps. In this case, after executing the preparation step on one sample 20, the processing steps can be executed on a plurality of objects 10.

In the laser processing method of the above embodiment, the preparation step and the processing step are executed continuously, but the preparation step and the processing step may be executed separately. In this case, by causing the storage part 42 to acquire the compressive residual stress imparted to the sample 20 on the surface 20a of the sample 20 or the predetermined coefficient, the preparation step can be executed when the laser processing apparatus 1 is manufactured. This "predetermined coefficient" is a coefficient such as the sample irradiation intensity obtained on the basis of the compressive residual stress imparted to the sample 20 on the surface 20a of the sample 20, the object irradiation intensity, or the correction coefficient. Alternatively, the preparation step can be executed by storing a predetermined coefficient in a database in advance and having the processing part 41 acquire the predetermined coefficient from the database.

In the laser processing method of the above embodiment, the preparation step is executed, but at least one processing step only have to be executed. Also in this case, the variation in the compressive residual stress imparted to the object 10 can be curbed as compared with the case where the intensity of the laser light L per unit area is constant. However, if the preparation step is executed, since the moving average in the intensity of the laser light L per unit area can be increased on the basis of the compressive residual stress imparted to the sample 20, the variation in the compressive residual stress imparted to the object 10 can be more reliably curbed.

The objective area 11 is not limited to a flat surface and may be a curved surface. The objective area 11 is not limited to a rectangle and may have another shape such as a circle. The line L1 is not limited to a straight line and may be a curved line.

**Reference Signs List**

    1 Laser processing apparatus
    2 Support part
    3 Irradiation part
    4 Control part
    10 Object
    10a Surface
    11 Objective area

    20 Sample
    20a Surface
    21 Sample area
    L Laser light
    CS Convergence spot
    S Irradiation spot
    L1 Line

**Claims**

1. A laser processing method for imparting compressive residual stress to an object along an objective area on a surface of the object by irradiating the objective area with laser light, the method comprising: a processing step of scanning the objective area with an irradiation spot of the laser light while increasing a moving average in intensity of the laser light per unit area.

2. The laser processing method according to claim 1,

   wherein, in the processing step, a process of moving the irradiation spot of the laser light along each of a plurality of lines extending in a first direction and arranged in a second direction perpendicular to the first direction is executed to scan the objective area with the irradiation spot of the laser light, and
   wherein, in the processing step, the intensity of the laser light per unit area is increased for at least one of the plurality of lines to increase the moving average.

3. The laser processing method according to claim 2, wherein, in the processing step, as the process, a process of moving the irradiation spot of the laser light from the one side to the other side in the first direction and a process of moving the irradiation spot of the laser light from the other side to the one side in the first direction are alternately executed.

4. The laser processing method according to any one of claims 1 to 3, wherein, in the processing step, a position of a convergence spot of the laser light is moved in a direction intersecting with the objective area to increase the moving average.

5. The laser processing method according to any one of claims 1 to 4, further comprising:

   a preparation step of scanning a sample area on a surface of a sample with the irradiation spot of the laser light while keeping the intensity of the laser light per unit area constant to acquire compressive residual stress imparted to the sample on the surface of the sample, wherein, in the processing step, the moving average in the intensity of the laser light per unit area is increased on the basis of the compressive residual stress imparted to the sample.

6. A laser processing apparatus for imparting compressive residual stress to an object along an objective area on a surface of the object by irradiating the objective area with laser light, the apparatus comprising:

a support part configured to support the object;
an irradiation part configured to irradiate the objective area with the laser light; and
a control part configured to control an operation of at least one of the support part and the irradiation part,
wherein the control part controls the operation of at least one of the support part and the irradiation part such that the objective area is scanned with an irradiation spot of the laser light while a moving average in intensity of the laser light per unit area is increased.

# Fig.1

*Fig.2*

(a)

(b)

# Fig.3

```
        ┌──────────┐
        │  START   │
        └──────────┘
              │
              ▼
┌─────────────────────────────────┐
│  SET SAMPLE IN LASER PROCESSING  │──── S01
│           APPARATUS              │
└─────────────────────────────────┘
              │
              ▼
┌─────────────────────────────────┐
│      SCAN SAMPLE AREA WITH       │──── S02
│  IRRADIATION SPOT OF LASER LIGHT │
└─────────────────────────────────┘
              │
              ▼
┌─────────────────────────────────┐
│   ACQUIRE COMPRESSIVE RESIDUAL   │──── S03
│    STRESS IMPARTED TO SAMPLE     │
└─────────────────────────────────┘
              │
              ▼
┌─────────────────────────────────┐
│  ACQUIRE CORRECTION COEFFICIENT (Z) │──── S04
└─────────────────────────────────┘
              │
              ▼
┌─────────────────────────────────┐
│ ACQUIRE INTENSITY OF LASER LIGHT FOR │──── S05
│  IMPARTING CONSTANT COMPRESSIVE  │
│    RESIDUAL STRESS TO SAMPLE     │
└─────────────────────────────────┘
              │
              ▼
┌─────────────────────────────────┐
│ ACQUIRE INTENSITY OF LASER LIGHT FOR │──── S06
│  IMPARTING CONSTANT COMPRESSIVE  │
│    RESIDUAL STRESS TO OBJECT     │
└─────────────────────────────────┘
              │
              ▼
┌─────────────────────────────────┐
│   SET OBJECT IN LASER PROCESSING │──── S07
│           APPARATUS              │
└─────────────────────────────────┘
              │
              ▼
┌─────────────────────────────────┐
│ SCAN OBJECTIVE AREA ON THE BASIS OF │──── S08
│   INTENSITY OF LASER LIGHT FOR   │
│  IMPARTING CONSTANT COMPRESSIVE  │
│    RESIDUAL STRESS TO OBJECT     │
└─────────────────────────────────┘
              │
              ▼
        ┌──────────┐
        │   END    │
        └──────────┘
```

# Fig.4

FOURTH SIDE

20a    20

21

SECOND SIDE

FIRST SIDE

L1    L1    S    L1

THIRD SIDE

Y

Z    X

**_Fig.5_**

FOURTH SIDE

10a      10

11

SECOND
SIDE

FIRST
SIDE

L1          L1      S      L1

THIRD SIDE

Y

Z      X

*Fig.6*

# *Fig.7*

(a)

(b)

## Fig.8

## *Fig.9*

(a)

(b)

## Fig.10

◇ COMPARATIVE EXAMPLE  ● EXAMPLE 1  ■ EXAMPLE 2

# Fig.11

|  | COMPARATIVE EXAMPLE | EXAMPLE 1 | EXAMPLE 2 |
|---|---|---|---|
| MAXIMUM VALUE (MPa) | -189.3 | -170.9 | -201.1 |
| MINIMUM VALUE (MPa) | -312.4 | -237.9 | -297.1 |
| AVERAGE VALUE (MPa) | -254.6 | -210.0 | -248.2 |
| DEVIATION (MPa) | 20.4 | 14.5 | 18.3 |
| DEVIATION/\|AVERAGE\| (%) | 8.0 | 6.9 | 7.4 |

# Fig.12

(a)

(b)

# *Fig.13*

(a)

(b)

# *Fig.14*

(a)

(b)

# Fig.15

## Fig.16

**INTERNATIONAL SEARCH REPORT**

International application No.

PCT/JP2021/025359

A.   CLASSIFICATION OF SUBJECT MATTER
Int. Cl. B23K26/356(2014.01)i, B23K26/00(2014.01)i
FI: B23K26/356, B23K26/00 N

According to International Patent Classification (IPC) or to both national classification and IPC

B.   FIELDS SEARCHED

Minimum documentation searched (classification system followed by classification symbols)
Int. Cl. B23K26/356, B23K26/00

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | JP 2011-115853 A (TOSHIBA CORP.) 16 June 2011 (2011-06-16), claims 1-8, fig. 1-17 | 1-6 |
| A | JP 2015-221918 A (NTN CORP.) 10 December 2015 (2015-12-10), claim 1, fig. 1-7 | 1-6 |
| A | JP 8-206869 A (TOSHIBA CORP.) 13 August 1996 (1996-08-13), paragraphs [0035]-[0057], fig. 1-6 | 1-6 |

☐   Further documents are listed in the continuation of Box C.          ☒   See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| | |
|---|---|
| Date of the actual completion of the international search | Date of mailing of the international search report |
| 19.08.2021 | 31.08.2021 |
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

Form PCT/ISA/210 (patent family annex) (January 2015)

## INTERNATIONAL SEARCH REPORT
Information on patent family members

| International application No. |
|---|
| PCT/JP2021/025359 |

| Patent Documents referred to in the Report | Publication Date | Patent Family | Publication Date |
|---|---|---|---|
| JP 2011-115853 A | 16.06.2011 | (Family: none) | |
| JP 2015-221918 A | 10.12.2015 | (Family: none) | |
| JP 8-206869 A | 13.08.1996 | US 5790620 A<br>column 6, line 36 to<br>column 9, line 35,<br>fig. 1-6<br>EP 724929 A2 | |

**EP 4 197 689 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H8112681 A